# EUROPEAN PATENT APPLICATION

(11) **EP 4 550 604 A1**
(43) Date of publication of application: **07.05.2025**
(21) Application number: 23207083.9
(22) Date of filing: 31.10.2023
(51) Int. Cl.: H02J 3/00, H02J 3/32, H02J 4/00

(54) **AN ENERGY STORAGE SYSTEM EMBEDDED IN A POWER NETWORK**

(71) Applicant: Hitachi Energy Ltd, 8050 Zürich (CH)
(72) Inventor: Bandaru, Teja, 517130 Chittoor, AP (IN); Kannan, Vinothkumar, 600128 Chennai, TN (IN)
(74) Representative: Zacco Sweden AB

(57) **Abstract**

Embodiments herein provide an energy storage system (100) connected to a power network. The energy storage system (100) comprises a transformer (110) with at least three windings, and a converter (120) configured to convert AC to DC or DC to AC received from the transformer, where an input side of the converter (120) is connected to a tertiary winding out of the at least three windings of the transformer (110). The energy storage system (100) further comprises an energy storage device (130) connected to an output side of the converter (120), where the energy storage device (130) handles power imbalance in the power network, and where the ESD (130) is having a protection mechanism for protecting the ESD (130) in case of failure conditions in the ESD (130).

## Description

### TECHNICAL FIELD

The present disclosure generally relates to energy storage requirements to manage power imbalance in AC grids. More particularly, it relates to an energy storage system that manages the power imbalance in the AC grids.

### BACKGROUND

The advancement of High Voltage Direct Current (HVDC) converter technology lead to planning and establishment of high power onshore and offshore renewable energy transmission projects. With the penetration of such renewable based sources through non-synchronous and non-rotating mass mediums (such as HVDC), inertia of connected power system decreases which thereby increases frequency instability risk.

Generally, energy storage systems in electrical grids for short (like primary reserves) and long (like secondary and tertiary reserves) duration support of the electrical grid provides a solution to the frequency instability risk. The energy storage system uses a separate transformer other than a main transformer for connecting an energy storage device with the power network which increases the overall capital cost of the system.

### SUMMARY

Consequently, there is a need for a cost-effective, redundant, and new energy storage system that alleviates at least some of the above-cited problems.

It is therefore an object of the present disclosure to provide an energy storage system for inertia and fast frequency response supports, to mitigate, alleviate, or eliminate all or at least some of the above-discussed drawbacks of presently known solutions.

This and other objects are achieved by means of an energy storage system (ESS) as defined in the appended claims. The term exemplary is in the present context to be understood as serving as an instance, example or illustration.

According to an aspect of the present disclosure, an energy storage system (ESS) for providing inertia support and controlling frequency of a power network to which the ESS is connected is disclosed. The ESS comprises a transformer with at least three windings, a primary winding out of the at least three windings of the transformer is connected to an input from the power network, a secondary winding out of the at least three windings is connected as an output to the power network. The ESS further comprises a converter that converts AC to DC or DC to AC received from the transformer, where an input side of the converter is connected to a tertiary winding out of the at least three windings of the transformer. The ESS further comprises an energy storage device (ESD) that is connected to an output side of the converter, where the ESD handles a power imbalance in the power network, and where the ESD is having a protection mechanism for protecting the ESD in case of failure conditions in the ESD. Further, the topology of the ESS eliminates a requirement of a dedicated expensive transformer for the ESS to operate.

Advantageously, the power network may share the relatively expensive high voltage transformer for connecting the ESS in order to controlling the inertia and/or the frequency in the power network caused due to penetration of more and more renewable based sources. Thereby, frequency imbalance in the power network may be efficiently handled.

In addition, connecting the ESS to a tertiary winding of the existing power network transformer achieves a cost reduction compared to implementing different dedicated transformers for the ESS.

In some embodiments, the converter is a Line-Commutated Converter (LCC).

In some embodiments, the ESS further comprises a filtering circuit for an AC side of the LCC such that AC terminals of the LCC are connected to the tertiary winding through the filtering circuit, and the filtering circuit filters out harmonics interference with AC voltage and AC current before feeding the AC voltage and the AC current to the power network.

In some embodiments, the ESS further comprises a filtering circuit for a DC side of the LCC, connected between the LCC and the ESD, where the filtering circuit is configured to filter out harmonics interference with output of the LCC, that comprises DC voltage and DC current, before feeding to the ESD.

In some embodiments, the ESS further comprises a High Speed Switch (HSS) between the LCC and the ESD, where the HSS interchanges DC terminals between the LCC and the ESD, in order to facilitate a quick change between a rectifying mode and an inverting mode of the ESS.

In some embodiments, the HSS executes the interchange when DC current in the circuit of the ESS is zero and the LCC is in idle/blocking mode.

In another embodiment, the converter is a Voltage-Sourced Converter (VSC).

In some embodiments, the ESS further comprises a pre-insertion resistor arrangement that controls an inrush current during charging of the converter and the ESD, where the pre-insertion resistor arrangement includes a bypass breaker.

In some embodiments, the VSC is a two-level, three-level, a half-bridge, or a full-bridge modular multilevel converter (MMC).

In some embodiments, the power network is a High Voltage Direct Current system.

In some embodiments, the failure conditions comprise at least one of commutation failures, short-circuit failures, or ground failures in the converter during an inverting mode of operation of the converter or DC circuit faults.

In some embodiments, the ESS further comprises a protection circuit connected to the ESD, where the protection circuit is connected to the ESD for executing the protection mechanism, and wherein the protection circuit is connected to the ESD as one of an external circuit or in a combined modular structure.

In some embodiments, wherein when the protection circuit is connected to the ESD as the external circuit, the protection circuit comprises a freewheeling diode and an insulated-gate bipolar transistor (IGBT) in series with the ESD.

In some embodiments, wherein when the protection circuit is connected to the ESD as the combined modular structure, the protection circuit comprises a pair of IGBTs connected in half-bridge configuration.

In some embodiments, wherein the ESD comprises at least one of super capacitors, a battery storage, or a combination of the super capacitor and the battery storage.

Therefore, different functions such as the ESS may share a relatively expensive high voltage transformer in the power network. As a result, the ESS may be cost-effective system with high reliability and availability.

In some embodiments, any of the above aspects may additionally have features identical with or corresponding to any of the various features as explained above for any of the other aspects.

Advantage of some embodiments is that the energy storage system disclosed herein may be used for renewable energy integration, utilizing HVDC or any inverter based resource (IBR), like renewable integration with power electronic converters.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Fig. 1: discloses a block diagram of an example energy storage system connected to a power network, the energy storage system comprises a transformer, and a converter along with an energy storage device integrated on a tertiary winding of the transformer, according to some embodiments;
- Fig. 2: discloses a block diagram of an example energy storage system connected to a power network, the energy storage system comprises a transformer, and a pair of filters, an LCC converter, an HSS switch, a protection circuit, and an energy storage device, integrated on a tertiary winding of the transformer, according to some embodiments;
- Fig. 3: discloses a block diagram of an example energy storage system connected to a power network, the energy storage system comprises a transformer, and a pre-insertion resistor, a VSC converter, a protection circuit, and an energy storage device, integrated on a tertiary winding of the transformer, according to some embodiments;
- Fig. 4: discloses a circuit diagram of an example energy storage system connected to a power network, the energy storage system comprises a transformer, and an AC filter, a DC filter, an LCC converter, an HSS switch, a protection circuit, and an energy storage device, integrated on a tertiary winding of the transformer, according to some embodiments; and
- Fig. 5: discloses a circuit diagram of an example energy storage system connected to a power network, the energy storage system comprises a transformer, and a pre-insertion resistor, a VSC converter, a protection circuit, and an energy storage device, integrated on a tertiary winding of the transformer, according to some embodiments;
- Fig. 6A: discloses a circuit diagram of an example energy storage system and a protection circuit, according to some embodiments;
- Fig. 6B: discloses a circuit diagram of an example energy storage system module including a protection circuit, according to some embodiments;
- Fig. 7: discloses a graph depicting a variation of DC voltage, DC current, active power, reactive power, and a firing angle of LCC converter during rectifying mode of operation of the ESS, according to some embodiments;
- Fig. 8: discloses a graph depicting a variation of DC voltage, DC current, reactive power, and an extinction angle of LCC converter during inverting mode of operation of the ESS, according to some embodiments.
- Fig. 9: discloses a graph depicting a variation of DC voltage, DC current, reactive power, and an extinction angle of LCC converter during energy support mode with battery as the ESD, according to some embodiments.

### DETAILED DESCRIPTION

Aspects of the present disclosure will be described more fully hereinafter with reference to the accompanying drawings. The apparatus and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

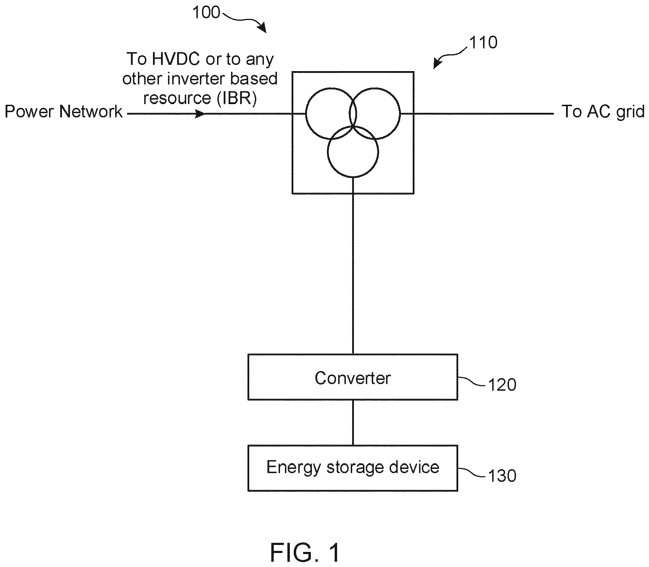

Fig. 1 discloses a block diagram of an example Energy Storage System (ESS) 100 connected to a power network. The ESS 100 comprises a transformer 110, and a converter 120 along with an Energy Storage Device (ESD) 130 integrated on a tertiary winding of the transformer 110, according to some embodiments. The power network is an interconnected network for electricity delivery from generation units to the consumer end. In a power network, it is important to ensure stable, reliable and efficient operation of power within. Integration of large-scale renewable energy sources has introduced additional challenges in order to actively control transmission in the power network. Energy storage systems are considered as both a generation asset, as it reduces peak load and acts as a generator while injecting electricity into the power network, and a transmission asset, as it moves electricity in time thereby reducing congestion and curtailment of renewable energy sources.

In case of a high power renewable energy transmission, there is a need to absorb/dissipate excessive reactive power or active power present in the power network during faults like fault in a line, grid fault, etc. An excessive reactive power or active power in the power network causes power imbalance in the power network.

A transformer in the power network raises/lowers voltage coming from the generation end/transmission lines of the power network. The transformer 110 in the ESS 100 includes at least three windings. A primary winding out of the at least three windings of the transformer 110 is connected to an input from the power network and a secondary winding out of the at least three windings is connected as an output to the power network. Further, a tertiary winding out of the at least three windings of the transformer is connected to the converter 120 and the ESD 130. The tertiary winding is connected either in 'delta' or in 'star' configuration. The converter 120 being on an input side of the converter 120 and connected to the tertiary winding converts AC to DC or DC to AC coming from the transformer 110.

Further, the ESD 130 connected to an output side of the converter 120, such that the ESD 130 handles the power imbalance in the power network. The ESD 130 is having a protection mechanism for protecting the ESD 130 in case of occurrence of failure conditions within the ESD 130. The ESD 130 is either supercapacitors, battery storage, or any other similar or a combination of these. In general, supercapacitors experience wide variation of DC voltage as compared to the battery storage, during energization (rectifying mode) and energy support modes (inverting mode).

Therefore, the proposed solution is quite distinctive since the ESS 100 is designed such that it shares the transformer (i.e. through its tertiary winding), thereby eliminating a need of a separate transformer.

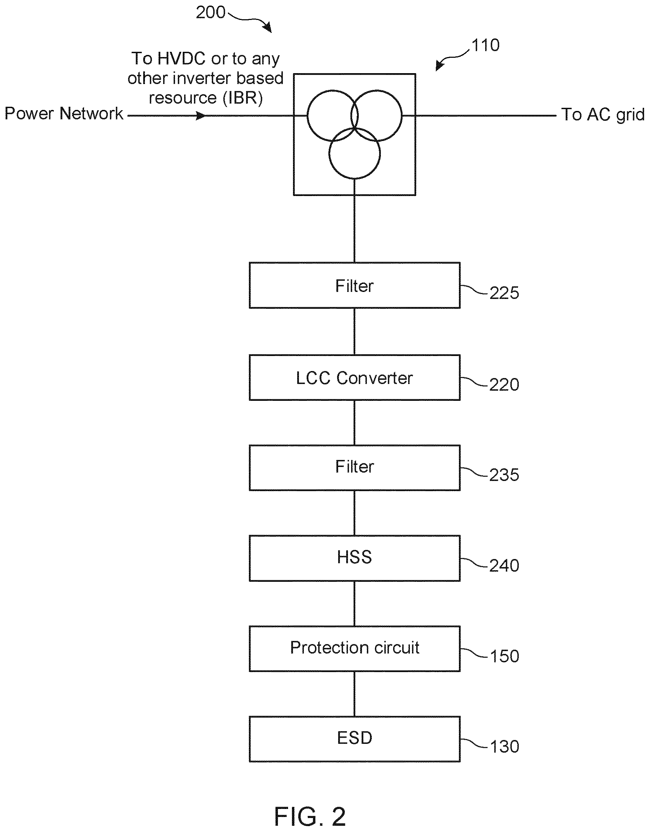

As depicted in Fig. 2, the ESS 200 comprises the transformer 110 with at least three windings. In some examples, the transformer 110 referred herein may be a high voltage transformer. The transformer 110 comprises at least three windings. Among the at least three windings of the transformer 110, the primary winding and the secondary winding of the transformer 110 is connected to the input and the output from the power network, respectively. The tertiary winding of the transformer 110 is connected to the ESD 130 through a pair of filtering circuits 225, 235, the converter 220, a High Speed Switch (HSS) 240, and a protection circuit 150.

According to an embodiment, the converter 120 is a Line-Commutated Converter (LCC) 220. In general, an LCC arrangement is used to convert electric power from AC to DC or vice versa. The term line-commutated indicates that AC/DC or DC/AC conversion process relies on a stable line voltage, with clear zero voltage crossings of in an AC system to which the LCC is connected in order to have a flow commutation from one switching element to another. According to an example, the transformer 110 is a converter transformer corresponding to the LCC 220.

The filtering circuit 225 is an AC filter. According to an example, the filtering circuit 225 is an AC passive filter. In general, passive filters does not require a power source to operate and output of passive filters changes with change in load. The filtering circuit 225 is connected on an AC side of the LCC 220 such that AC terminals of the LCC 220 are connected to the tertiary winding through the filtering circuit 225. The filtering circuit 225 filters out harmonics interference with AC voltage and AC current before feeding the AC voltage and the AC current to the power network from the LCC.

The filtering circuit 235 is a DC filter. The filtering circuit 225 is connected on a DC side of the LCC 220, connected between the LCC 220 and the ESD 130. The filtering circuit 235 filters out harmonics interference with output of the LCC 220, that comprises DC voltage and DC current, before feeding to the ESD 130. DC side filtering is used for smoothening the DC voltage and DC current before feeding to the ESD 130 connected at the DC side.

The HSS 240 reverses the voltage polarity for changing direction of active power. According to an embodiment, in the ESS 100, for fast interchanging of the DC terminals between the LCC 220 and the ESD 130, facilitating quick change between energization (rectifying) and energy support (inverting) modes of the ESS 100. The interchange with HSS 240 is performed when the DC current is zero and at LCC idle/blocking period. Du ring the inverting mode of operation, if a failure condition occurs in LCC 220, the ESD's DC terminals are short circuited. During this situation, rise of current from the ESD 130 is limited by the LCC's DC side filter inductor. Further, the protection circuit 150 is added along with the ESD 130 to handle continuous rise of the DC current above protection limits.

The failure condition comprises at least one of commutation failures, short-circuit failures, or ground failures during the inverting mode, or DC circuit faults. Commutation failure is an adverse dynamic event occurring if one of a converter valve that is supposed to turn off, continues to conduct without transferring its current to the next valve in the firing sequence.

The protection circuit 150 is connected to the ESD 130 for executing the protection mechanism, and the protection circuit 150 is connected to the ESD 130 as one of an external circuit or in a combined modular structure. When the protection circuit 150 is connected to the ESD 130 as the external circuit, the protection circuit 150 comprises a freewheeling diode and an insulated-gate bipolar transistor, IGBT, in series with the ESD 130. Further, when the protection circuit 150 is connected to the ESD 130 as the combined modular structure, the protection circuit 150 comprises a pair of IGBTs connected in half-bridge configuration.

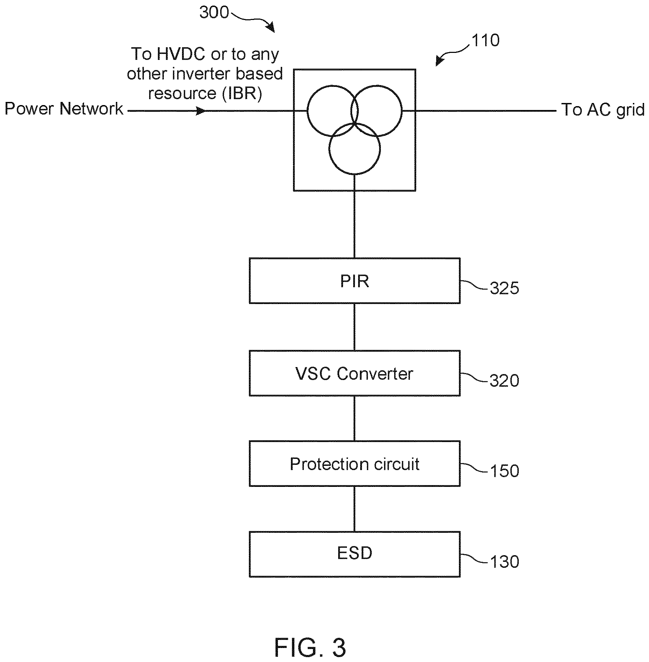

According to another embodiment, the ESS 300 comprises the transformer 110 with at least three windings. In some examples, the transformer 110 referred herein may be a high voltage transformer. The transformer 110 comprises at least three windings. Among the at least three windings of the transformer 110, the primary winding and the secondary winding of the transformer 110 is connected to the input and the output from the power network, respectively. The tertiary winding of the transformer 110 is connected to the ESD 130 through a pre-insertion resistor arrangement 325, the converter 320, and a protection circuit 150, as depicted in Fig. 3,

The converter 320 is a Voltage Source Converter (VSC) 320. According to an example, the VSC is self-commutated converter that connects the AC side and the DC side of the system using devices suitable for high power electronic applications, such as Insulated Gate Bipolar Transistor (IGBT). The VSC is capable of self-commutation, and being able to generate AC voltages without a need to rely on an AC system. In some examples, the VSC 320 referred herein comprises one or more of: force commutated semiconductor devices, an IGBT, and a Gate turn-off thyristor (GTO). According to an example, the VSC 320 is a two-level, three-level, a half-bridge, or a full-bridge modular multilevel converter (MMC).

According to an example, the VSC 320 is connected to the tertiary winding of the transformer 110. The VSC 220 is configured to work as a source or a sink of reactive power in the power network. Thus, the VSC 220 may handle power imbalance in the power network by generating or absorbing the reactive power present in the power network. According to another example, the power network is a High Voltage Direct Current (HVDC) system.

The pre-insertion resistor arrangement 325 is connected with the VSC 320 to limit an inrush currents during charging of the VSC 320 and the ESD 130. The pre-insertion resistor arrangement 325 is designed based on power network's voltage and energy of the switching transient. Further, the pre-insertion resistor arrangement 325 includes a bypass breaker.

Further, the pre-insertion resistor arrangement 325 comprises a bypass breaker in parallel to a pre-insertion resistor. When the pre-insertion resistor in the pre-insertion resistor arrangement 325 is bypassed by closing the bypass breaker after a selected insertion time, a new transient current is generated. This transient current has a significant impact on the bypass breaker's interrupting performance. According to an example, a relationship between the insertion time and the bypass breaker's interrupting performance is calculated mathematically.

The protection circuit 150 is added along with the ESD 130 to handle continuous rise of the DC current above protection limits. The failure condition comprises at least one of commutation failures, short-circuit failures, or ground failures during the inverting mode, or DC circuit faults. Commutation failure is an adverse dynamic event occurring if one of a converter valve that is supposed to turn off, continues to conduct without transferring its current to the next valve in the firing sequence.

The protection circuit 150 is connected to the ESD 130 for executing the protection mechanism, and the protection circuit 150 is connected to the ESD 130 as one of an external circuit or in a combined modular structure. When the protection circuit 150 is connected to the ESD 130 as the external circuit, the protection circuit 150 comprises a freewheeling diode and an insulated-gate bipolar transistor, IGBT, in series with the ESD 130. Further, when the protection circuit 150 is connected to the ESD 130 as the combined modular structure, the protection circuit 150 comprises a pair of IGBTs connected in half-bridge configuration.

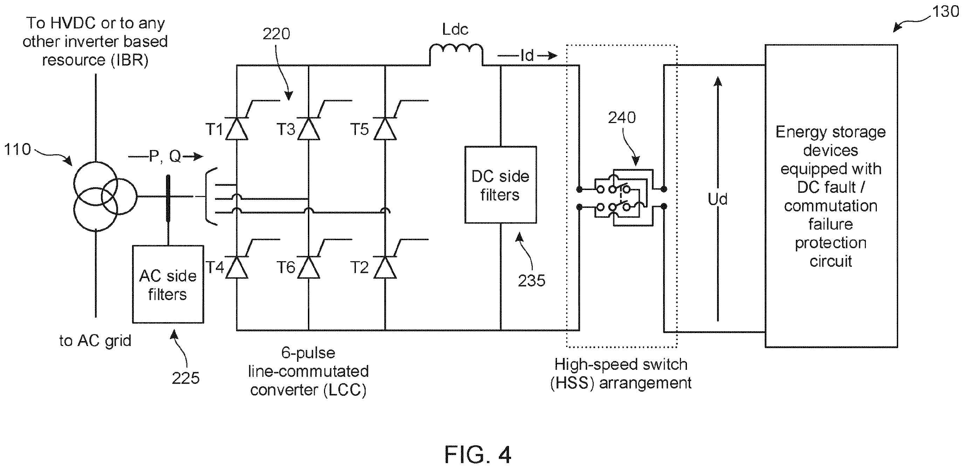

As depicted in fig. 4, the ESS 200 comprises the transformer 110 with at least three windings. In some examples, the primary winding and the secondary winding of the transformer 110 is connected to the input, for example to an AC grid and the output from the power network, for example to High voltage Direct Current (HVDC), respectively. The tertiary winding of the transformer 110 is connected to the ESD 130 through the AC side filter 225, the LCC converter 220, a High Speed Switch (HSS) 240, and a protection circuit 150.

The LCC 220 comprises switching devices that are either uncontrolled, such as diodes, or that are only turned on (not off) by control action, such as thyristors. The LCC 220 has a six-pulse bridge that contains six electronic switches (T1, T2, T3, T4, T5, and T6), each connecting one of the three phases of the power network to one of two DC terminals. A complete switching element is referred to as a valve. Two valves in the six-pulse bridge conduct at a time: one to a phase in the top row and one from a different phase in the bottom row. The two conducting valves connect two of the three AC phase voltages, in series, to the DC terminals. therefore, DC output voltage at an instant is given by series combination of two AC phase voltages. According to an example, a twelve-pulse bridge is used that contains 12 electronic switches.

The AC side filter 225 is connected in series connection on the AC side of the LCC 220. Therefore, the AC side filter 225 filters out harmonics interference with AC voltage and AC current before feeding the AC voltage and the AC current to the power network from the LCC.

A DC side filter 235 is connected in parallel to the LCC 220, and on a DC side of the LCC 220. The DC side filter 235 filters out harmonics interference with output of the LCC 220, that comprises DC voltage and DC current, before feeding to the ESD 130. DC side filtering is used for smoothening the DC voltage and DC current before feeding to the ESD 130 connected at the DC side. According to an example, a DC smoothing reactor L_{DC} is connected in series in between the LCC 220 and the HSS 240.

The HSS 240 is connected in series between the LCC 220 and the ESD 130. The HSS 240 reverses the voltage polarity for changing direction of active power. According to an embodiment, in the ESS 100, for fast interchanging of the DC terminals between the LCC 220 and the ESD 130, facilitating quick change between energization (rectifying) and energy support (inverting) modes of the ESS 100. The interchange with HSS 240 is performed when the DC current is zero and at LCC idle/blocking period. Further, the protection circuit 150 is added along with the ESD 130 to handle continuous rise of the DC current above protection limits.

The protection circuit 150 is connected to the ESD 130 for executing the protection mechanism, and the protection circuit 150 is connected to the ESD 130 as one of an external circuit or in a combined modular structure.

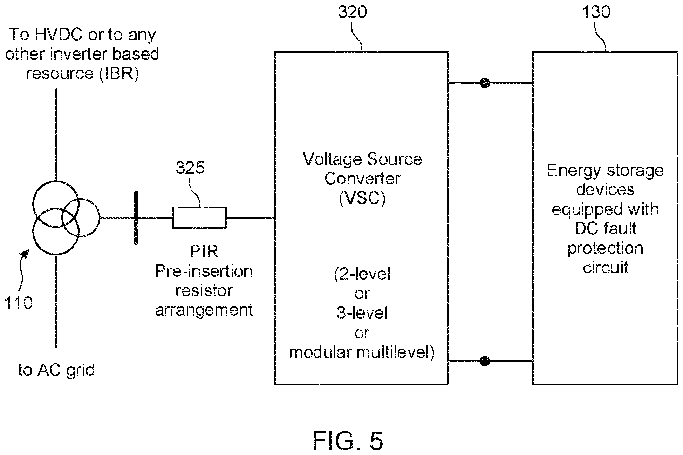

As shown in Fig. 5, the ESS 300 comprises the transformer 110 with at least three windings. In some examples, the transformer 110 referred herein may be a high voltage transformer. The transformer 110 comprises at least three windings. Among the at least three windings of the transformer 110, the primary winding and the secondary winding of the transformer 110 is connected to the input, for example an AC grid, and the output from the power network, for example to High Voltage Direct Current (HVDC), respectively. The tertiary winding of the transformer 110 is connected to the ESD 130 through a pre-insertion resistor arrangement 325, the converter 320, and a protection circuit 150,
The pre-insertion resistor arrangement 325 is connected in series between the input from tertiary winding and the VSC 320. The pre-insertion resistor arrangement 325 is connected with the VSC 320 to limit an inrush currents during charging of the VSC 320 and the ESD 130. The pre-insertion resistor arrangement 325 is designed based on power network's voltage and energy of the switching transient. Further, the pre-insertion resistor arrangement 325 comprises a bypass breaker in parallel to a pre-insertion resistor. When the pre-insertion resistor in the pre-insertion resistor arrangement 325 is bypassed by closing the bypass breaker after a selected insertion time, a new transient current is generated. This transient current has a significant impact on the bypass breaker's interrupting performance. According to an example, a relationship between the insertion time and the bypass breaker's interrupting performance is calculated mathematically.

The the VSC 320 is connected in series between the pre-insertion resistor arrangement 325 and the ESD 130. The ESD 130 is further comprises a protection circuit 150 connected to the ESD 130 for executing the protection mechanism. The protection circuit 150 is connected to the ESD 130 as one of an external circuit or in a combined modular structure.

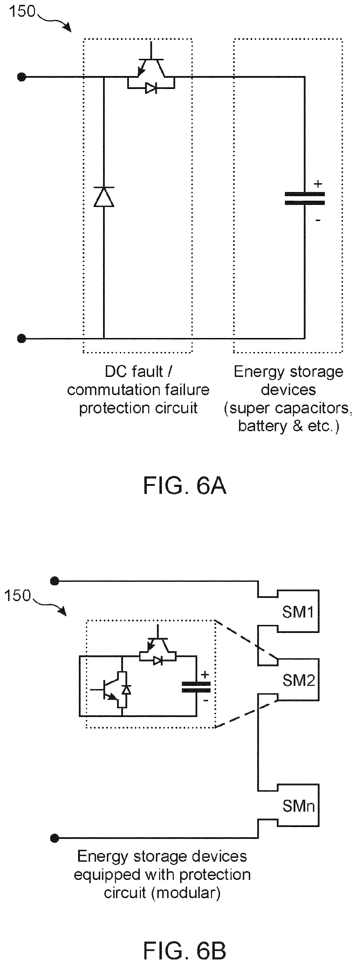

Fig. 6A depicts an embodiment when the protection circuit 150 is connected to the ESD 130 as the external circuit. The protection circuit 150 comprises a freewheeling diode in parallel with the ESD 130 and a parallel combination of a diode and an IGBT in series with the ESD 130. Upon detecting the failure conditions, gate pulses for the IGBT which is in series with the ESD 130 is blocked to disconnect the ESD 130. After blocking the IGBT following the failure conditions, the DC current in the LCC filter inductor circulates through freewheeling diode. Once the failure conditions is over, the ESD 130 is connected by giving gate pulses to the IGBT and a control system changes the extinction or the firing angle of LCC to control the corresponding current in the circuit. According to an example, the IGBT is replaced with a fast-acting mechanical switch.

The ESD 130 comprises one or more of a supercapacitor, a battery storage, or any other similar or a mix of these. The supercapacitor experiences a wide variation of the DC voltage as compared to the battery storage, during energization and energy support modes. The LCC 220 supports this wide variation of the DC voltage by varying its firing, or extinction angle. Further, the two-level or three-level VSC is not configured so as to support this wide DC voltage variation. However, the MMC with an appropriate number of full-bridge cells supports this wide variation of the DC voltage.

Fig. 6B depicts an embodiment when the protection circuit 150 is connected to the ESD 130 as the combined modular structure, the protection circuit 150 comprises a pair of a parallel combination of a diode and an IGBT. A first pair being in parallel with the ESD 130 and a second pair being in series with the ESD 130 thus both pairs are connected in half-bridge configuration with ESD 130. Upon detecting the failure conditions, gate pulses for the IGBTs are blocked to disconnect the ESD 130. After blocking the IGBT following the failure conditions, the DC current in the LCC filter inductor circulates through the diodes of parallel connected pairs. Once the failure conditions is over, the ESD 130 is connected by giving gate pulses to the IGBT and a control system changes the extinction or the firing angle of LCC to control the corresponding current in the circuit.

An advantage corresponding to embodiment of Fig. 6B is that by introduction of the modular feature to the ESD 130, its reliability and scalability is increased. Further, if the ESD 130 is selected as the supercapacitor, with proper insertion and bypass of the submodules in modular ESD, the DC voltage can be maintained close to a nominal value irrespective of the supercapacitor's discharge. Also, if any energy storage module needs to be bypassed, for example during any failure in the energy storage module, the IGBT of parallel pair of the corresponding module is turned-on and the IGBT of series connected pair is turned-off.

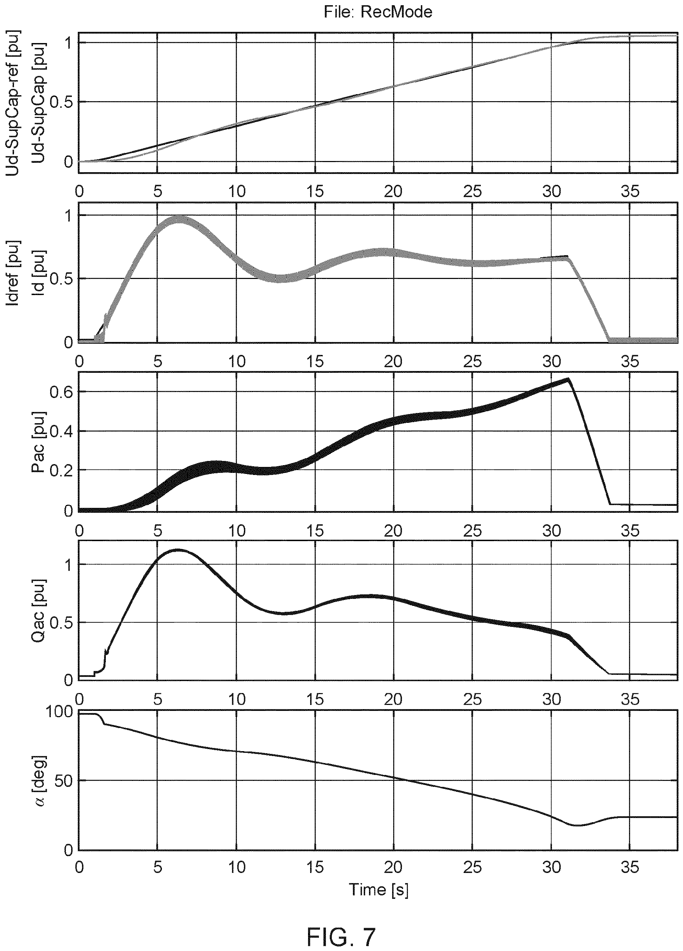

Fig. 7 depicts a graph corresponding to an energization mode/rectifying mode of operation with supercapacitors. In the rectifying mode of operation, the supercapacitors are charged from zero to a nominal voltage, for example 1 pu. While charging the supercapacitor, the DC current is restricted, for example below 1.0 pu. The variation of active power, reactive power and the firing angle during this scenario are shown in the graph. As depicted in Fig. 7, the firing angle of the converter 120 starts at 90° (when DC voltage is zero) and reduces to its minimum with the increase of DC voltage to its nominal value. The maximum rate of charging (or rise of DC voltage) of the super capacitor is limited by the allowed DC current limit for the converter. The total charging is completed within 30s, however, in reality the charging time is in the range of minutes. This control also avoids the need for any external pre-insertion resistor and associated losses.

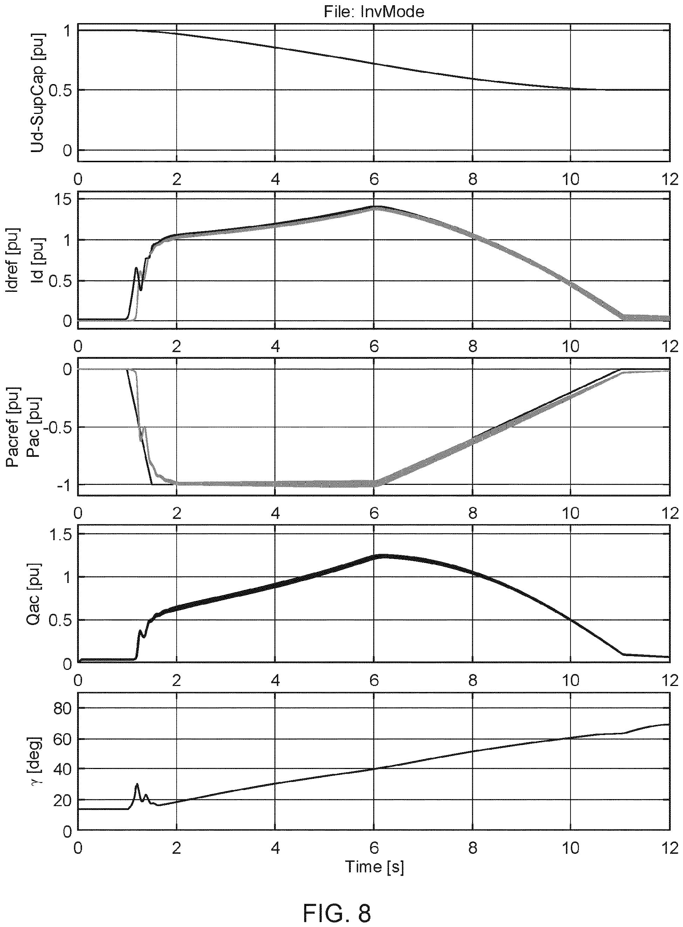

Fig. 8 depicts a graph corresponding to an energy support mode/Inverting mode of operation with supercapacitors. In the energy support mode, the power is transferred from the supercapacitors to the AC grid and the corresponding results are shown in the graph of the Fig. 8. As can be seen from the fig. 8, the active power of the converter follows the power reference which in turn discharges the super capacitors as indicated by the decrease of DC voltage in the fig. 8. The corresponding variation of DC current, reactive power and the extinction angle are also shown in the graph. The DC current is restricted to 1.5 pu which occurs mostly during reduced DC voltage condition to meet the required active power support. The reactive power drawn by the LCC 220 attains a peak value close to 1.2 pu. This includes both reactive power consumption of transformer (due to leakage reactance) and the converter (due to firing angle delay).

As described by the figures 7 and 8, the reactive power demand by the LCC 220 becomes high at certain operating conditions which is mainly influenced by the current magnitude and the firing (or extinction angle). This reactive power demand by the LCC 220 can be partially met by the AC side filter 225 and the remaining can be met by the HVDC converter such that the reactive power burden on the electrical grid (and hence voltage dip) can be reduced.

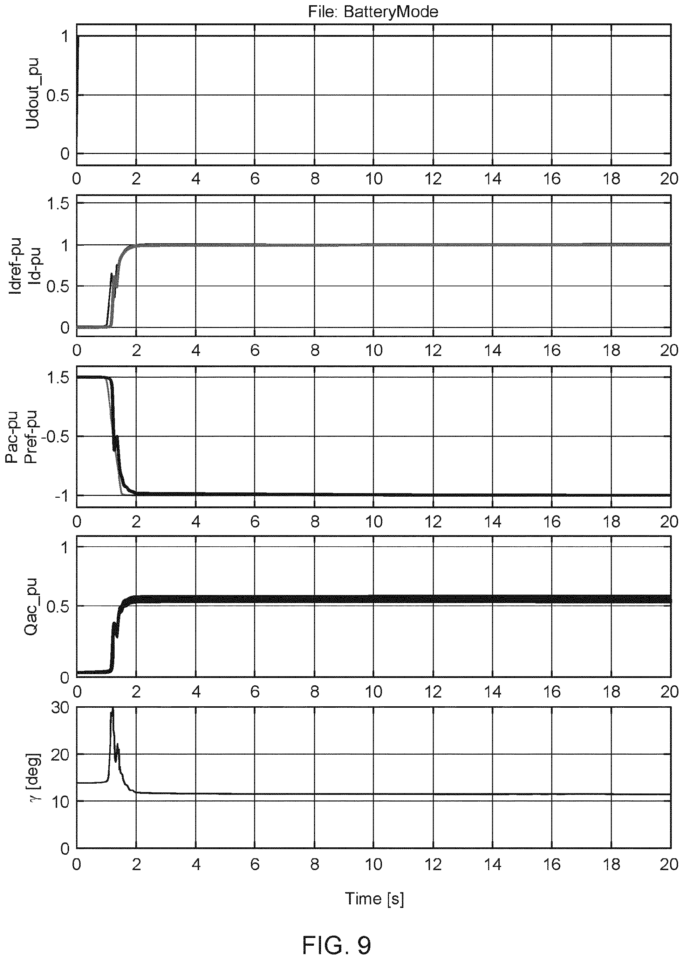

Fig. 9 depicts a graph corresponding to Energy support mode with battery storage. The simulation results of the proposed ESS with battery as energy storage device are shown in Figure 9. Unlike the super capacitors, if the ESD 130 is selected as batteries, the reduction in terminal DC voltage is less with the discharge of the batteries. Hence, the terminal DC voltage is close to the nominal value during the energy support. As can be seen in the graph of fig. 9, the extinction angle is minimum. As a result, the reactive power consumption by the converter is close to 0.6 pu. Further, unlike in the case of super capacitors (where the reactive power changes with the DC voltage), here, the reactive power remains unchanged. Though the battery support is expected for longer duration (for example 10 minutes) than the super capacitors, the reduction in DC voltage will be less due to the discharge of the battery and the reactive power consumption remains unchanged.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. An energy storage system, ESS, (100) configured to be connected to a power network, the ESS (100) comprising:
a transformer (110) with at least three windings, wherein a primary winding out of the at least three windings of the transformer (110) is configured to be connected to an input from the power network, and wherein a secondary winding out of the at least three windings of the transformer (110) is connected as an output to the power network;
a converter (120) configured to convert AC to DC or DC to AC received from the transformer, wherein an input side of the converter (120) is connected to a tertiary winding out of the at least three windings of the transformer (110);
an energy storage device, ESD, (130) connected to an output side of the converter (120), wherein the ESD (130) is configured to handle power imbalance in the power network, and wherein the ESD (130) is having a protection mechanism for protecting the ESD (130) in case of failure conditions in the ESD (130).

2. The energy storage system (100) according to claim 1, wherein the converter (120) is a Line-Commutated Converter, LCC, (220).

3. The energy storage system (100) according to claim 2, further comprising a first filtering circuit (225) for an AC side of the LCC (220) such that AC terminals of the LCC (220) are connected to the tertiary winding through the first filtering circuit (225), and wherein the first filtering circuit (225) is configured to filter out harmonics interference with AC voltage and AC current before feeding the AC voltage and the AC current to the LCC (220) from the power network.

4. The energy storage system (100) according to any of the claims 2 or 3, further comprising
a second filtering circuit (235) for a DC side of the LCC (220), connected between the LCC (220) and the ESD (130), wherein the second filtering circuit (235) is configured to filter out harmonics interference with output of the LCC (220), that comprises DC voltage and DC current, before feeding to the ESD (130).

5. The energy storage system (100) according to any of the claims 2-4, further comprising
a High Speed Switch, HSS, (240) between the LCC (220) and the ESD (130), wherein the HSS (240) is configured to interchange DC terminals between the LCC (220) and the ESD (130), in order to facilitate a quick change between a rectifying mode and an inverting mode of the ESS (100).

6. The energy storage system (100) according to claim 5, wherein the HSS (240) is configured to execute the interchange when DC current in the circuit of the ESS (100) is zero and the LCC (220) is in idle/blocking mode.

7. The energy storage system (100) according to claim 1, wherein the converter (120) is a Voltage-Sourced Converter, VSC, (320).

8. The energy storage system (100) according to claim 7, further comprising a pre-insertion resistor arrangement (325) configured to control an inrush current during charging of the converter (120) and the ESD (130), wherein the pre-insertion resistor arrangement includes a bypass breaker.

9. The energy storage system (100) according to any of the claims 7-8, wherein the VSC (320) is a two-level, three-level, a half-bridge, or a full-bridge modular multilevel converter, MMC.

10. The energy storage system (100) according to any of the preceding claims, wherein the power network is a High Voltage Direct Current, HVDC, system or any other inverter based resource (IBR) connected to renewable sources.

11. The energy storage system (100) according to any of the preceding claims, wherein the failure conditions comprise at least one of commutation failures, short-circuit failures, or ground failures in the converter (120) during an inverting mode of operation of the converter (120) or DC circuit faults.

12. The energy storage system (100) according to any of the preceding claims, further comprising
a protection circuit (150) connected to the ESD (130), wherein the protection circuit (150) is connected to the ESD (130) for executing the protection mechanism, and wherein the protection circuit (150) is connected to the ESD (130) as one of an external circuit or in a combined modular structure.

13. The energy storage system (100) according to the claim 12, wherein, when the protection circuit (150) is connected to the ESD (130) as the external circuit, the protection circuit (150) comprises a freewheeling diode and an insulated-gate bipolar transistor, IGBT, which is in series with the ESD (130).

14. The energy storage system (100) according to the claim 12, wherein, when the protection circuit (150) is connected to the ESD (130) as the combined modular structure, the protection circuit (150) comprises a pair of insulated-gate bipolar transistors, IGBTs connected in half-bridge configuration.

15. The energy storage system (100) according to any of the preceding claims, wherein the ESD (130) comprises at least one of super capacitors, a battery storage, or a combination of the super capacitor and the battery storage.
